# EUROPEAN PATENT APPLICATION

(11) **EP 2 763 362 A1**
(43) Date of publication of application: **06.08.2014**
(21) Application number: 13305109.4
(22) Date of filing: 31.01.2013
(51) Int. Cl.: H04L 12/709, H04L 29/06, H04L 29/08, H04L 12/54

(54) **A method for connecting a multi-homed and MPTCP capable client with a regular TCP server**

(71) Applicant: Thomson Licensing, 92130 Issy-les-Moulineaux (FR)
(72) Inventor: Le Bolzer, Françoise, 35576 Cesson-Sévigné (FR); Gouache, Stephane, 35576 Cesson-Sévigné (FR); Montalvo, Luis, 35576 Cesson-Sévigné (FR)
(74) Representative: Huchet, Anne

(57) **Abstract**

According to the invention, the method for connecting a multi-homed and multipath protocol capable first device and a single path protocol capable second device within at least one communication network through a relay module, said multipath protocol being compliant with the single path protocol, is characterized in that it comprises, at the relay module running a relay application, a step of diverting (E1) the traffic exchanged between the first device and the second device; a step of creating (E4), when one multipath connection establishment request has been identified (E3) from said diverted traffic, an interface compliant with the multipath protocol and a corresponding interface compliant with the single path protocol; a step of establishing (E5) an end-to-end connection defined by a multipath connection between the first device and the relay module and by a single path connection between the relay module and the second device; and a step of forwarding (E6) data coming from said multipath connection and from said single path connection to, respectively, the second device and the first device through said multipath and single path compliant interfaces.

## Description

### FIELD OF THE INVENTION

The present invention relates generally to the transmission of data packets between a first and a second multi-homed devices through one or more communication networks and in particular - but not exclusively - to a method and gateway for connecting a multi-homed and multipath protocol capable client and a single path protocol server across at least one communication network through a relay module.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Nowadays, multimedia and data services use diverse communication paths (as for example satellite, cable, ADSL, 3G and 4G, WiFi, etc.). To take advantage of such various communication paths available, most of the recent devices include several radio interfaces. In particular, the new generation of mobile devices such as laptops, smartphones and tablets are commonly equipped with WiFi, 3G and Bluetooth interfaces.

However, multimedia services are usually implemented with the Transmission Control Protocol (shortly TCP) as the transport protocol which only uses a single communication path for each connection between two devices. As a consequence, multimedia services cannot take advantage of the available communication path diversity provided by the multiple interfaces of mobile devices in order to improve performance, resilience or availability.

To overcome such a drawback, the research community has developed the MultiPath Transmission Control Protocol (shortly MPTCP), which is an extension to the regular TCP protocol providing the ability to simultaneously transmit data of a single end-to-end connection across multiple paths between two devices. The MPTCP is defined, in particular, in the draft "TCP Extensions for Multipath Operation with Multiple Addresses" (A.Ford et. al.) published on October 22, 2012 by the Internet Engineering Task Force.

The MPTCP provides a multipath TCP service and, especially, supports the concurrent use of multiple IP addresses of a multi-homed device. The MPTCP protocol enables a transport connection to operate across multiple paths simultaneously in a compatible manner with multi-homed devices, initially designed to support a single path TCP connection.

In the framework of the present invention, it should be understood by:
- "multi-homed device", a device comprising at least two interfaces of communication (wired and/or wireless) - each interface having its own communication address (as for example an IP address) - in order to be able to exchange data packets with a remote communication device (possibly of a different type) in multipath mode. Consequently, the multi-homed device may involve a fixed or mobile telephone (possibly of a "smartphone" type), a fixed or portable computer, a Personal Digital Assistant (PDA), a content receiver (such as a decoder, a residential gateway or a Set-Top Box (STB)), or an item of network device such as content server;
- "communication path", a path connecting two communication devices (possibly multi-homed) thanks to two communication interfaces (one per device), so that a communication path shall be identified by the pair of communication addresses of the two corresponding communication interfaces; and
- "sub-flow", a flow of TCP packets operating over a single path, which forms part of a larger MPTCP connection. Such a sub-flow is started and terminated similarly to a regular TCP connection.

A MPTCP connection between a first and a second multi-homed devices is composed of a main regular TCP connection associated with a main communication path and one or more auxiliary TCP connections - linked to the main regular TCP connection - which are associated with auxiliary communication paths. Such a MPTCP connection continues to appear as a single TCP connection to the applications at both ends.

As already known, a multi-homed device - able to support the implementation of the MPTCP protocol (also named MPTCP capable) - has usually one fixed interface of communication assigned as the main interface to be used to initiate a MPTCP connection.

In order to benefit from the path diversity, at least one of the devices needs to be multi-homed, and both devices need to be MPTCP capable, otherwise the MPTCP connection falls back into a regular TCP connection and the path diversity cannot be used.

As usual with the introduction of a new Internet Protocol, the deployment is gradual and takes time before being widely used. Thus, there will be a long period of coexistence between devices being MPTCP capable and devices being only TCP capable, during which, the multipath conditions will not be fully met to be applied. As an illustration, a TCP video server - unable to carry out MPTCP - limits its service to the standard TCP connection and to a single path scenario, although the client device is equipped with several interfaces leading to a multipath opportunity.

The present invention proposes a solution to overcome at least the above mentioned disadvantage.

### SUMMARY OF THE INVENTION

To this end, the invention concerns a method for connecting a multi-homed and multipath protocol capable first device and a single path protocol capable second device within at least one communication network through a relay module, said multipath protocol being compliant with the single path protocol.

According to the present invention, said method is noteworthy in that it comprises, at the relay module running a relay application, the following steps of:
- diverting, towards said relay application, at least a part of the traffic exchanged between the first device and the second device;
- creating, when at least one multipath connection establishment request has been identified from said diverted traffic, an interface compliant with the multipath protocol and a corresponding interface compliant with the single path protocol to handle respectively the connection with the first device and with the second device, the multipath compliant interface and the single path compliant interface being in connection with each other;
- establishing an end-to-end connection defined by:
   ■ a multipath connection between the first device and the relay module handled by the multipath compliant interface; and
   ■ a single path connection between the relay module and the second device handled by the single path compliant interface;
- forwarding data coming from said multipath connection and from said single path connection to, respectively, the second device and the first device through said multipath and single path compliant interfaces.

Thus, thanks to the present invention, the method makes it possible to take advantage of the multipath architecture between the multi-homed and multipath protocol capable first device and the relay module without requiring any multipath capabilities from the second device. The invention can be especially worthy when the performances of the first device interfaces are low (low bandwidth) and non determinist (as with wireless interfaces). In this case, the multipath architecture can provide both a higher capacity and a better reliability on the first device side by aggregating the bandwidth of the diverse interfaces.

In a preferred embodiment, said method comprises a preliminary step of creating a listening interface able to parse, for instance, MPTCP traffic.

Preferably, the listening interface is associated with a connection interface of the relay module, said interface being reachable by at least one connection interface of the first device.

In addition, said method can further comprise the step of replacing the destination connection address of said multipath connection establishment request identified with the connection address of said listening interface.

Preferably, during said forwarding step, a Destination Network Address Translation operation is performed on data packets associated with the end-to-end connection and coming from either the client or the server, by replacing the destination address of said data packets with the corresponding connection address of the relay module.

Moreover, a table of correspondence can advantageously be implemented between the multipath compliant interface and the single path compliant interface to be able to forward data from one interface to the other, and reversely.

In said preferred embodiment, the multipath protocol corresponds to MPTCP and the single path protocol corresponds to TCP.

Besides, the present invention also concerns a relay module, arranged within at least one communication network, for connecting a multi-homed and multipath protocol capable first device and a single path protocol capable second device, said multipath protocol being compliant with the single path protocol, said relay module being able to implement, at least partially, the method as specified in one of the preceding claims.

According to the invention, said relay module runs a relay application and comprises:
- a unit for diverting, towards said relay application, at least a part of the traffic exchanged between the first device and the second device;
- a unit for creating, when at least one multipath connection establishment request has been identified from said diverted traffic, an interface compliant with the multipath protocol and a corresponding interface compliant with the single path protocol to handle respectively the connection with the first device and with the second device, the multipath compliant interface and the single path compliant interface being in connection with each other;
- a unit for establishing an end-to-end connection defined by:
   ■ a multipath connection between the first device and the relay module handled by the multipath compliant interface; and
   ■ a single path connection between the relay module and the second device handled by the single path compliant interface;
- means for forwarding data coming from said multipath connection and from said single path connection to, respectively, the second device and the first device through said multipath and single path compliant interfaces.

The present invention is further related to a gateway comprising:
- at least two first type connection interfaces to at least a first network, said first network comprising at least a multi-homed and multipath protocol capable first device;
- at least one second type connection interface to at least a second network, the latter comprising at least a single path protocol capable second device, said multipath protocol being compliant with the single path protocol;
- a relay module as previously described.

According to an aspect of the invention, one of said first type connection interfaces corresponds to the connection interface associated with the relay module, which is reachable by a connection interface of the first device.

### BRIEF DESCRIPTION OF THE DRAWINGS

The invention will be better understood and illustrated by means of the following embodiment and execution examples, in no way limitative, with reference to the appended figures on which:
- Figure 1 schematically depicts a diagram of an example of a client/server network architecture according to a preferred embodiment of the present invention;
- Figure 2 is a diagram of an example of a relay module according to said preferred embodiment;
- Figure 3 is a flow chart of a relay mechanism according to said preferred embodiment.

In the Figures, alike references refer to alike parts, unless otherwise indicated.

References disclosed in the description, the claims and the Figures may be provided independently or in any appropriate combination. Features may, where appropriate, be implemented in hardware, software, or a combination of the two.

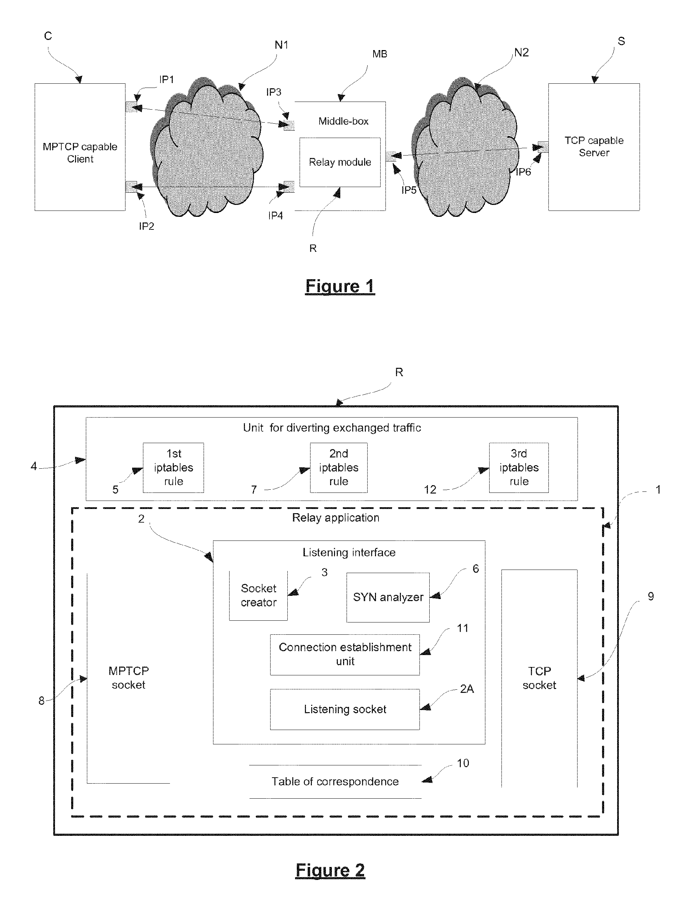

In addition, in Figure 2, the represented blocks are functional units, which can correspond to units physically separated or which can be included in a same physical unit. Namely, they could be developed in the form of software, hardware, or be implemented in one or several integrated circuits. For instance, these blocks or at least some of them can be grouped in a unique component or can constitute functionalities of a same software. In opposition, some blocks can eventually be divided into separate units.

### DETAILED DESCRIPTION OF PREFERRED EMBODIMENTS

According to a preferred embodiment, the present invention is depicted with regard to the multipath protocol MPTCP over the Internet Protocol. Naturally, the invention is not restricted to such a particular embodiment and other multipath protocols could of course be considered and implemented.

As depicted in Figure 1, the client/server network architecture according to the preferred embodiment comprises a multi-homed and MPTCP capable client C, a multi-homed and MPCTP capable middle-box MB and a only TCP capable server S (namely which is not MPTCP capable).

The client C - connected to the middle-box MB through a first network N1 (as a home network) - wants to connect to the server S through a second network N2 (as the Internet network). The first network N1 is connected to the second network N2 thanks to the middle-box MB.

In the depicted example of figure 1, the client C and the middle-box MB respectively comprise two first type interfaces of connection (wired and/or wireless, as for example WiFi, Ethernet, etc.) to the first network N1, each interface of connection being identified by an IP address (IP1 and IP2 for the client C, IP3 and IP4 for the middle-box MB). There are therefore up to four different paths between the client C and the middle-box MB, namely IP1-IP3, IP1-IP4, IP2-IP3 and IP2-IP4. Obviously, in a variant, the number of connection interfaces of the client C and the middle-box MB might be different from two.

The middle-box MB also comprises an additional second type interface of connection IP5 (wired and/or wireless) to the second network N2. Likewise, the server S is equipped with one second type interface of connection IP6 to the second network N2.

As a non-limitative example, the client C and the middle-box MB might be respectively a Personal Computer (PC) and a router, both running on a Linux operating system integrating a MPTCP stack. The server S can be a TCP server running with a regular TCP stack. The middle-box MB is connected, on one side to the client C through two Ethernet interfaces IP3 and IP4 and, on the other side, to the server S through a single Ethernet interface IP5.

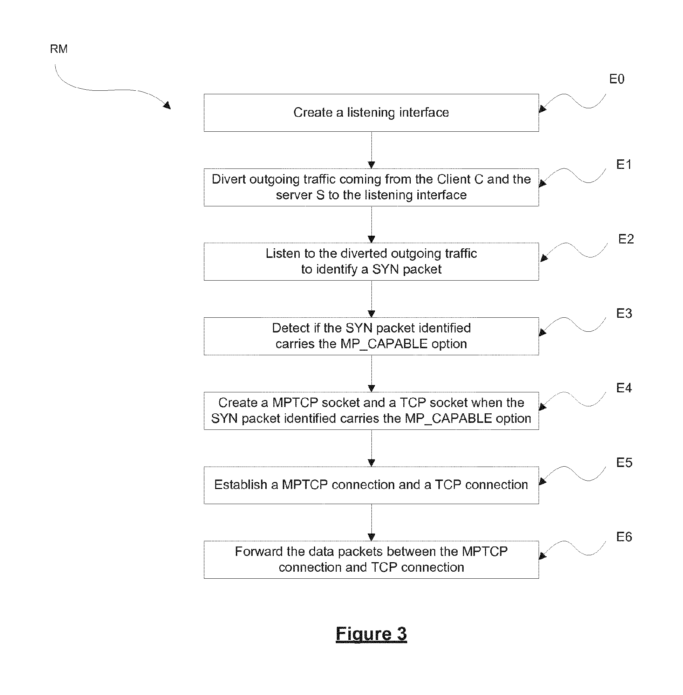

Since the multipath capabilities of the end-to-end connection between the client C and the server S are impossible (the server S being not MPTCP capable), a relay module R - arranged for example within the Middle-Box MB - performs a relay mechanism RM, thanks to a relay application 1 (see Figure 2) implemented by said relay module R. The flow chart of the Figure 3 depicts such a relay mechanism RM.

Two first type connection interfaces and a second type connection interface - both belonging to the Middle-Box MB - are associated with the relay module R. In other words, the relay module R is defined by a set of IP addresses (IP3 and IP4 for instance) on the client side and an IP address (IP5) on the server side.

As already known, since MPTCP is an extension to TCP, an MPTCP connection is initiated using the same process as a normal TCP connection, namely the three-way handshake (SYN, SYN/ACK, ACK). In addition, the client/server terminology matches to the TCP definitions. An MPTCP client is then a device that initiates a TCP connection by sending a SYN to a server using one of the available paths. In order to enable an additional path, a new TCP three-way handshake is carried out.

When dealing with MPTCP capable devices, the SYN, SYN/ACK and ACK packets embed specific data included in the header of the TCP segment, in the "option" field.

A MPTCP option of SYN packets is identified with a "kind" value equal to 30. The "subtype" field defines more specifically the MPTCP option. These options have been designed to check whether the remote device supports MPTCP. They also allow for exchanging some information to secure the establishment of additional subflows along the available paths. A MPTCP subflow is defined by a pair of IP addresses, one belonging to the client, the other one to the server.

When a MPTCP connection is initiated, the standard TCP three-way handshake is performed with SYN, SYN/ACK and ACK packets carrying a MultiPath Capable option, named MP_CAPABLE, identified by a subtype value equal to 0. This option declares that its sender (the client) is capable of performing multipath TCP.

Next, in order to set up an additional path, a subflow is associated with the initiated MPTCP connection. A new TCP three-way handshake is then carried out with the SYN, SYN/ACK and ACK packets carrying the MultiPath Join option, named MP_JOIN, identified by a subtype value equal to 1.

As shown on Figure 3, the relay module R creates, in a preliminary step E0, a listening interface 2 which is associated with the IP address IP3 of the relay module R. The listening interface 2 is then reachable by at least one of connection interfaces (IP1, IP2) of the client C. The creation of the listening interface 2 leads to the establishment of a listening socket 2A, performed by a socket creator 3 of the relay application 1.

In a further step E1, the relay module R diverts (or captures) - towards the relay application 1 - all the TCP traffic exchanged between the client C and the server S, thanks to a unit 4 for diverting traffic.

In particular, in the specific Linux implementation and architecture, the TCP traffic coming from the client C or the server S is diverted to the listening interface 2 by applying three iptables rules. These three rules have been applied on the middle-box MB before running the relay application 1 of the relay module R. The first two rules are relative to the TCP SYN packets, the third rule is relative to the rest of TCP traffic. In the last two iptables rules, a DNAT operation is performed thanks to the netfilter routing functionalities.

The first iptables rule, ***"iptables -A PREROUTING -t mangle -p tcp -- syn -j QUEUE"*** (represented by block 5 on Figure 2) filters SYN packets (aka a connection establishment request) and firstly diverts them to a netfilter QUEUE (used to queue packets) to be processed (in a further step E2) by the SYN analyzer (represented by the block 6) of the listening interface 2 in order to extract and to store the TCP connection endpoints. Each SYN packet is next released by the netfilter QUEUE.

The second iptables rule ***"iptables -A PREROUTING -t nat -p tcp* -- *syn -j DNAT -to @IP_Relay:port_listen_sock"*** (represented by block 7) next performs a Destination Network Address Translation operation (shortly D-NAT operation) on the SYN packets to send them to the listening socket 2A of the relay application 1. In this case, the D-NAT operation replaces the destination IP address and port number of the SYN packets with the IP address and port number of the listening socket 2A, so that the SYN packets are diverted towards the latter.

The third iptables rule, ***"iptables -A PREROUTING -t nat -p tcp -j DNAT --to* @*IP_Relay"*** (represented by block 12) realizes a D-NAT operation in order to send any data packets associated with a newly established end-to-end connection (as described hereinafter) towards the relay application 1 which manages the data flow.

In the step E2, the relay module R listens to the diverted or captured traffic forwarded to its listening interface 2 thanks to its diverting unit 4, to identify a connection establishment request SYN coming from the client C. To do so, the relay application 1 scans, on one side, the netfilter QUEUE using the SYN analyzer 6 and, on the other side, the listening socket 2A.

In a further step E3, when a SYN packet has been identified from the diverted traffic, forwarded to the listening interface 2, said interface 2 detects whether the SYN packet identified carries the MP_CAPABLE option or not. To do so, the SYN analyzer (represented by the block 6) of the listening interface 2 parses the subtype value of the MPTCP option of said SYN packet. If the SYN packet is MP_CAPABLE, the SYN analyzer 6 extracts and stores the TCP connection endpoints identifiers. Both, server S and client C IP addresses and port numbers may be associated in a correspondence table (represented by the block 10 on Figure 2).

In a further step E4, when the diverted SYN packet embeds the MP_CAPABLE option, the listening socket 2A - which acts as a server for the client C - performs the creation of twin sockets to validate the establishment of the client's MPTCP connection request:
- a socket 8 compliant with MPTCP, so called MPTCP socket, to handle the MPTCP connection with the client C. The MPTCP socket 8 is in connection with the MPTCP stack of the middle-box MB; and
- a socket 9 compliant with TCP, so called TCP socket, to handle the TCP connection with the server S. The TCP socket 9 is linked to the MPTCP stack of the middle-box MB.

In a further step E5, the relay application 1 establishes - thanks to a connection establishment unit 11 - an end-to-end connection defined by the two following connections:
- a multipath connection (or MPTCP connection) between the client C and the relay module R handled by the MPTCP socket 8; and
- a single path connection (or TCP connection) between the relay module R and the server S handled by the TCP socket 9.

The MPTCP socket 8 and the TCP socket 9 are linked with each other through the correspondence table 10 stored by the relay application 1 and updated by the listening interface 2 whenever it is required by the reception of a new multipath connection establishment request.

In a further step E6, the diverted traffic is forwarded from a socket 8, 9 to another according to the table of correspondence 10. When a data packet is received at the MPTCP socket 8 or at the TCP socket 9, such a packet goes through the D-NAT operation, thanks to the third iptables rules 12, and then it is forwarded to the relay application which manages the considered sockets and is able to forward data from one socket to its twin socket 9, 8.

As an example, the traffic associated with the newly established MPTCP connection is forwarded to the server S through the MPTCP socket 8 and the corresponding TCP socket 9 of the relay module R. Likewise, data packets received by the relay module R on server side (namely by the connection IP5) are transmitted to the client C through the TCP socket 9 and the associated MPTCP socket 8.

In particular:
- when data packets come from the client C, they are diverted by the diverting unit 4 to the MPTCP socket 8 of the relay application 1 before being forwarded to the TCP socket 9 (its twin socket) by the relay application;
- similarly when data packets come from the server S, they are diverted to the TCP socket 9 of the relay application 1 before being forwarded to the MPTCP socket 8 by the relay application.

It has to be noted that the iptables rules are a part of the Linux implementation of the relay R. These three rules can be generalized as followed: the TCP traffic between the MPTCP client C and the TCP server S should be diverted to the listening interface 2 belonging to the relay R. This listening interface 2 should be able to handle on one side the MP_CAPABLE SYN packets to create the corresponding table 10 and both MPTCP and TCP sockets 8 and 9. On the other side, the listening interface 2 should be able to forward the rest of the TCP traffic between both sockets 8 and 9.

It might be appreciated that, when a forwarded SYN packet embedding an MP_JOIN option is detected by the listening interface 2, the relay module R does not carry out any special operation. The corresponding SYN (MP_JOIN) packet is sent to the MPTCP socket 8, which handles the multipath functionalities.

In addition, when a request to close the connection is received on the client side of the relay module R or on the server side of the latter, the twin sockets MPTCP and TCP might be closed.

Steps E0 to E6 define the relay mechanism RM implemented by the relay application 1 of the relay module R.

Obviously, steps E0 to E6 might be, in a variant, carried out in a different order, for at least some of those steps.

Besides, in case of several clients communicating with remote servers through the same middle-box, there are one MPTCP socket and one TCP socket per TCP connection. All MPTCP sockets (respectively all TCP sockets) are associated with the same first type connection interface (respectively the same second type connection interface) of the relay module R.

In a variant, the unit 4 might be a standalone hardware or software module - distinct from the relay module R - and able to sniff the client's outgoing traffic to check the SYN packets and perform DNAT operation on the client's outgoing TCP flows to a listening interface.

In another variant, only a part of the traffic exchanged between the client C and the server S is diverted by the relay module R, in order to take care of not interrupting, for instance, the encrypted sessions by filtering out selected destination ports (e.g. Port 443 is assumed to be HTTPS traffic). The sessions to be filtered out are marked at the very beginning of the iptables/netfilter processing such that they are not diverted to the relay module R and flow unchanged to the server S. In another alternative, a configuration file may be set up to list the sessions to be diverted and/or the sessions that should not be diverted.

Similarly, it may be appreciated that the three iptables rules should be applied only on the TCP traffic coming from or to MPTCP clients to be optimal (the relay operation is not required for standard TCP connections). If an additional traffic coming from non MPTCP-capable clients has to be taken into account by the relay R, the three rules should be adjusted to limit the diverting action of unit 4 to the MPTCP flows only.

In addition, in the above mentioned preferred embodiment, the relay module R is integrated in a middle-box MB, as a hardware and/or software module. Obviously, in an alternative, the relay module might be an independent hardware module connected to the client and the server, directly or through a middle-box.

The present invention having been described in its preferred embodiment, it is clear that it is susceptible to numerous modifications and embodiments within the ability of those skilled in the art.

In the claims hereof, any element expressed as a means (or unit) for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

It is to be understood that the present principles may be implemented in various forms of hardware, software, firmware, special purpose processors, or a combination thereof. Preferably, the present principles may be implemented as a combination of hardware and software.

Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform may also include an operating system and microinstruction code. The various processes and functions described herein may either be part of the microinstruction code or part of the application program (or a combination thereof) that is executed via the operating system.

## Claims

1. A method for connecting a multi-homed and multipath protocol capable first device (C) and a single path protocol capable second device (S) within at least one communication network (N1, N2) through a relay module (R), said multipath protocol being compliant with the single path protocol, **characterized in that** the method comprises, at the relay module (R) running a relay application (1), the following steps of:
- diverting (E1), towards said relay application (1), at least a part of the traffic exchanged between the first device (C) and the second device (S);
- creating (E4), when at least one multipath connection establishment request has been identified (E3) from said diverted traffic, an interface compliant (8) with the multipath protocol and a corresponding interface compliant (9) with the single path protocol to handle respectively the connection with the first device (C) and with the second device (S), the multipath compliant interface (8) and the single path compliant interface (9) being in connection with each other;
- establishing (E5) an end-to-end connection defined by:
■ a multipath connection between the first device (C) and the relay module (R) handled by the multipath compliant interface (8); and
■ a single path connection between the relay module (R) and the second device (S) handled by the single path compliant interface (9);
- forwarding (E6) data coming from said multipath connection and from said single path connection to, respectively, the second device (S) and the first device (C) through said multipath and single path compliant interfaces (8; 9).

2. A method according to claim 1, comprising a preliminary step of creating a listening interface (2).

3. A method according to claim 2, wherein the listening interface (2) is associated with a connection interface (IP3) of the relay module (R), said interface (IP3) being reachable by at least one connection interface of the first device (C).

4. A method according to claim 2 or 3, wherein it further comprises the step (E1) of replacing the destination connection address of said multipath connection establishment request identified with the connection address of said listening interface (2).

5. A method according to preceding claims, wherein, during said forwarding step (E6), a Destination Network Address Translation operation is performed on data packets associated with the end-to-end connection and coming from either the client (C) or the server (S), by replacing the destination address of said data packets with the corresponding connection address of the relay module (R).

6. A method according to the preceding claims, wherein a table of correspondence (10) is implemented between the multipath compliant interface (8) and the single path compliant interface (9) to be able to forward data from one interface to the other, and reversely.

7. A method according to the preceding claims, wherein the multipath protocol corresponds to the Multi Path Transmission Control Protocol and the single path protocol corresponds to the Transmission Control Protocol.

8. Relay module, arranged within at least two communication networks (N1, N2), for connecting a multi-homed and multipath protocol capable first device (C) and a single path protocol capable second device (S), said multipath protocol being compliant with the single path protocol, said relay module (R) being able to implement, at least partially, the method as specified in one of the preceding claims, **characterized in that** said relay module (R) runs a relay application (1) and comprises:
- a unit (4) for diverting, towards said relay application (1), at least a part of the traffic exchanged between the first device (C) and the second device (S);
- a unit (3) for creating, when at least one multipath connection establishment request has been identified (E3) from said diverted traffic, an interface (8) compliant with the multipath protocol and a corresponding interface (9) compliant with the single path protocol to handle respectively the connection with the first device (C) and with the second device (S), the multipath compliant interface (8) and the single path compliant interface (9) being in connection with each other;
- a unit (11) for establishing an end-to-end connection defined by:
■ a multipath connection between the first device (C) and the relay module (R) handled by the multipath compliant interface (8); and
■ a single path connection between the relay module (R) and the second device (S) handled by the single path compliant interface (9);
- means (8; 9) for forwarding data coming from said multipath connection and from said single path connection to, respectively, the second device (S) and the first device (C) through said multipath and single path compliant interfaces.

9. A gateway comprising:
- at least two first type connection interfaces (IP3, IP4) to at least a first network (N1), said first network (N1) comprising at least a multi-homed and multipath protocol capable first device (C);
- at least one second type connection interface (IP5) to at least a second network (N2), the latter comprising at least a single path protocol capable second device (S), said multipath protocol being compliant with the single path protocol, **characterized in that** it comprises a relay module (R) as specified in claim 8.

10. A gateway according to claim 9, wherein one of said first type connection interfaces (IP3, IP4) corresponds to the connection interface associated with the relay module (R), which is reachable by a connection interface (IP1, IP2) of the first device (C).
